# EUROPEAN PATENT APPLICATION

(11) **EP 1 845 367 A1**
(43) Date of publication of application: **17.10.2007**
(21) Application number: 06712855.3
(22) Date of filing: 26.01.2006
(51) Int. Cl.: G01N 21/64, G01N 25/16

(54) **DETECTION METHOD, MICRO-CHEMICAL SYSTEM USING THE DETECTION METHOD, SIGNAL DETECTION METHOD, THERMAL LENS SPECTROPHOTOMETRY SYSTEM, FLUORESCENT DETECTION SYSTEM, SIGNAL DETECTION DEVICE, SIGNAL DETECTION SYSTEM, SIGNAL DETECTION PROGRAM, AND STORAGE MEDIUM**

(30) Priority: 27.01.2005 JP 2005020225; 07.09.2005 JP 2005259722; 21.12.2005 JP 2005368050
(71) Applicant: Nippon Sheet Glass Company, Limited, Tokyo 105-8552 (JP)
(72) Inventor: TAMAI, Shinji, an 2-chome, Minato-ku, Tokyo, 1058552 (JP); FUKUZAWA, Takashi, an 2-chome, Minato-ku, Tokyo, 1058552 (JP); YAMAGUCHI, Jun, an 2-chome, Minato-ku, Tokyo, 1058552 (JP)
(74) Representative: Rank, Christoph
(86) International application number: PCT/JP2006/301712
(87) International publication number: WO 2006/080556

(57) **Abstract**

A detection method that can measure a plurality of measured substances in a fluid test sample at the same time, easily perform qualitative analysis and quantitative analysis, and reduce measurement errors between excitation energies of the measured substances, and a microchemical system using the detection method. A probe light with a wavelength of 780 nm CW-oscillated from a probe light source 16 is irradiated on measured substances in a minute channel 1, excitation lights with wavelengths of 658 nm and 532 nm, respectively, are modulated into plurality of flashing excitation lights with frequencies 1kHz and 1.2 kHz and a duty factor of 50 % and irradiated on the measured substances in the minute channel 1, the probe light refracted by a thermal lens formed by the irradiated flashing excitation lights is detected with respect to individual frequency components at the same time, and a signal of the detected probe light is guided from a PD 21 to a PC 24 as a signal processing apparatus via an IV amplifier 22. The PC 24 carries out FFT processing to measure the intensity of the signal with respect to individual frequency components.

## Description

### Technical Field

The present invention relates to a detection method, a microchemical system using the detection method, a signal detection method, a thermal lens spectroscopic system, a fluorescence detection system, a signal detection apparatus, a signal detection system, a signal detection program, and a storage medium storing the program. In particular, the present invention relates to a detection method applicable to thermal lens spectroscopy (TLS) categorized as photothermal spectroscopy (PTS) (more specifically, a detection method applicable to a thermal lens microscope (TLM)), a microchemical system using the detection method, a signal detection method for a thermal lens spectroscopic system and a fluorescence detection system, a thermal lens spectroscopic system, a fluorescence detection system, a signal detection apparatus, a signal detection system, a signal detection program, and a storage medium storing the program.

### Background Art

Conventionally, the integration technology for causing chemical reactions to occur in a minute space has received attention from the standpoint of speeding-up of chemical reactions, reactions of a minute amount, on-site analysis, and so on, and researches for it have been conducted aggressively.

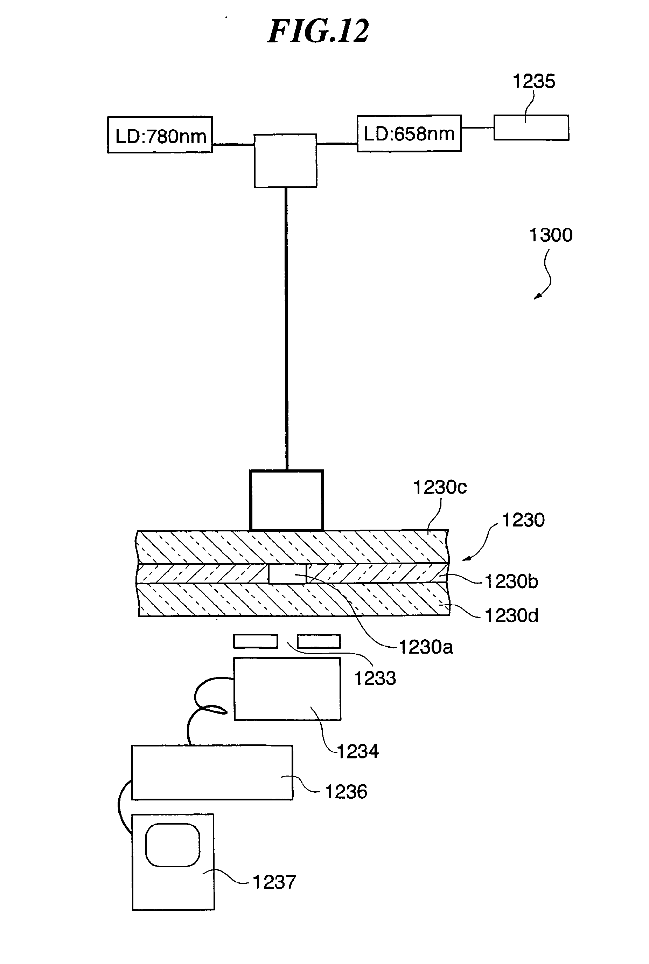

An example of the integration technology is a microchemical system 1300 in which mixture, reaction, separation, extraction, detection, and so on of fluid test samples are performed in a minute channel 1230a inside a microchip 1230 as shown in FIG. 12.

The microchip 1230 is comprised of, for example, a glass substrate 1230b with a groove formed therein, and glass substrates 1230c and 1230d in which a sample injection/discharge small hole is formed at a position corresponding to the groove and which are joined to the glass substrate 1230b. After joining, the groove forms the above-mentioned minute channel 1230a.

In this micro chemical system 1300, since the amount of test samples is minute, it is absolutely necessary to carry out a highly-sensitive detection method. Examples of the highly-sensitivity detection method include a thermal lens spectroscopic method and a fluorescence detection method using photothermal conversion spectroscopic using the thermal lens effect.

The thermal lens spectroscopic method uses the effect of photothermal conversion, that is, the thermal lens effect that light is irradiated on a surface of a microchip 1230 in such a manner as to be concentrated in a test sample flowing in the minute channel 1230a inside the microchip 1230, a solute in the test sample absorbs the irradiated light to release thermal energy, which in turn causes a solvent to locally rise in temperature, causing the refractive index to change.

Specifically, the microchip 1230 is disposed under an objective lens of a microscope, and the excitation light with a predetermined wavelength output from an excitation light source and modulated using a predetermined frequency (hereinafter referred to as "modulation frequency") by a modulator is caused to fall upon the microscope. The excitation light is collected and irradiated on a test sample solution in the minute channel inside the microchip 1230 by the objective lens of the microscope. The focal position of the collected and irradiated excitation light lies inside the test sample solution, and a thermal lens is formed with this focal position at the nucleus.

On the other hand, probe light with a different wavelength from the wavelength of the excitation light and output from a probe light source is caused to fall upon the microscope. The probe light is collected by the objective lens of the microscope as is the case with the excitation light.

Thus, when a thermal lens has a concave lens effect, probe light passes through a test sample solution and diverges, and when a thermal lens has a convex lens effect, probe light passes through a test sample solution and converges. The diverging or converging probe light is received by a detector via a conversion lens and a filter, or only a filter, and the detector detects the received light as a measurement signal. That is, the intensity of this measurement signal corresponds to the thermal lens formed in the test sample solution. It should be noted that probe light may have the same wavelength as the wavelength of excitation light, and excitation light may also double as probe light.

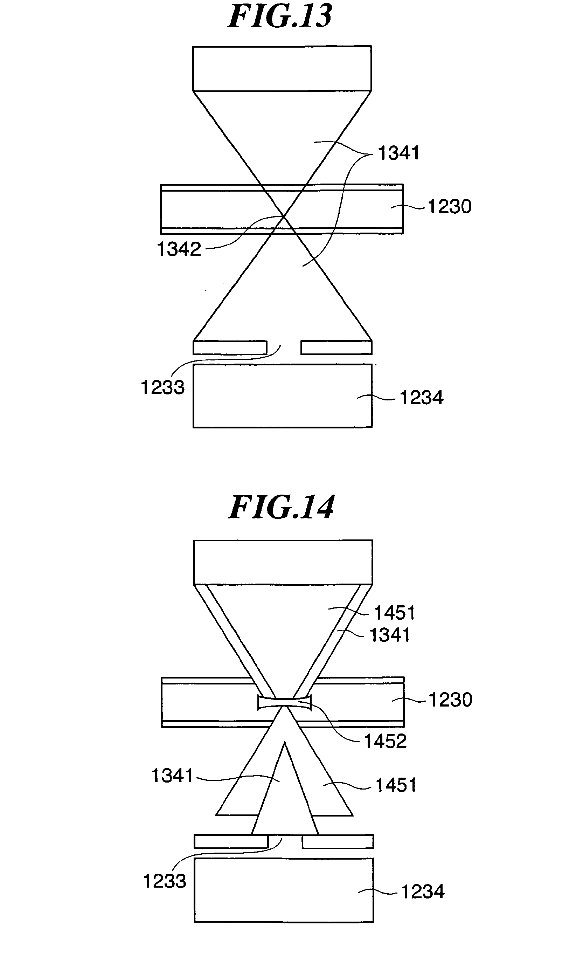

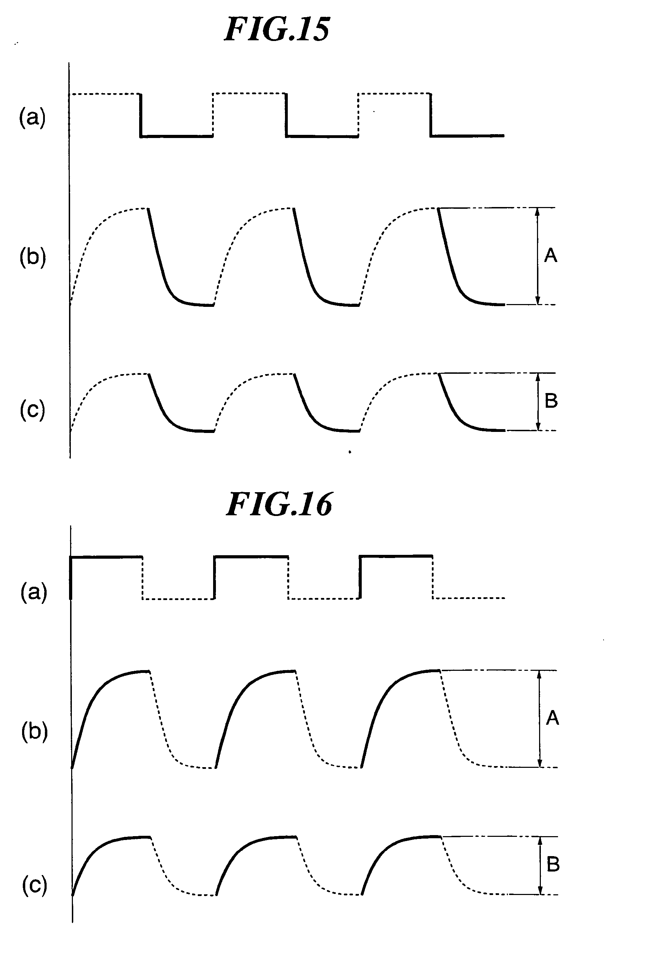

Specifically, as shown in FIG. 13, the thermal lens spectroscopic method is implemented by irradiating probe light 1341 with a such wavelength as not to be absorbed by a measured substance in such a manner that the focus 1342 of the probe light 1341 lies at substantially the center of the minute channel 1230a, and measuring the probe light 1341 having passed through the minute channel 1230a and a pinhole 1233 using a photodetector (PD) 1234, but, as shown in FIG. 14, if excitation light 1451 with such a wavelength as to be absorbed by a measured substance is irradiated on substantially the center of the minute channel 1230a, energy of the absorbed light is converted to heat, and a solvent in the vicinity of the focus of the excitation light 1451 is caused to locally rise in temperature, inducing a local refractive index gradient. As a result, a pseudo-concave lens, that is, a thermal lens 1452 was formed in the vicinity of the focus of the excitation light 1451. This thermal lens 1452 refracts the probe light 1341 to change the amount of light passing through the pinhole 1233, and by observing changes in the amount of light, it is possible to measure the physical quantity e.g. the concentration of a measured substance. In general, the excitation light 1451 is caused to flash at a frequency of about 1 kHz ((a) in FIG. 15 and (a) in FIG. 16), and the probe light 1341 refracted by the thermal lens is detected as an amplitude A ((b) in FIG. 15 and (b) in FIG. 16) and an amplitude B ((c) in FIG. 15 and (c) in FIG. 16) of a signal with a predetermined frequency. Here, the amplitude A in (b) in FIG. 15 and (b) in FIG. 16 means the amplitude of a signal of probe light detected in a case where a measured substance has a high concentration, and the amplitude B in (c) in FIG. 15 and (c) in FIG. 16 means the amplitude of signal of probe light detected in a case where a measured substance has a low concentration.

Also, the above-mentioned fluorescence detection method is implemented by irradiating light on a surface of the microchip 1230 in such a manner as to converge to a test sample flowing in the minute channel 1230a inside the microchip 1230 and using the detector 1234 to measure the intensity of fluorescence emitted from a solute in the test sample having absorbed the irradiated light. In this fluorescence detection method as well, excitation light 1451 to be irradiated is modulated using a predetermined frequency by a modulator 1235 so as to make the noise-and-signal separation easier.

A minute signal detecting device 1236 extracts a frequency component corresponding to a test sample solution from a measurement signal detected by the detector 1234, and an information processing apparatus 1237 such as a PC analyzes the intensity of the extracted frequency component to find the concentration of the test sample solution.

In this case, a lock-in amplifier is used as the minute signal detecting device 1236. The lock-in amplifier is a device that uses a reference signal of a fixed frequency to extract a frequency component corresponding to the reference signal from a measurement signal in which a plurality of frequency components and noise are mixed. By using a signal of the same frequency as the modulation frequency used in the modulation of the excitation light 1451 modulated by the modulator 1235 as a reference signal, the lock-in amplifier extracts a modulation frequency component from a measurement signal and finds the concentration of a test sample solution from the intensity of the extracted modulation frequency (see e.g. Japanese Laid-Open Patent Publication (Kokai) No. 2003-344323).

Moreover, an FFT signal processing device that removes peaks no more than a predetermined threshold value from a frequency spectrum obtained by fast Fourier transformation as noise has been known as a device that extracts a frequency component from a measurement signal (see e.g. Japanese Laid-Open Patent Publication (Kokai) No. H11-051989).

Specifically, the fluorescence detection method is implemented by irradiating light on a surface of the microchip 1230 in such a manner as to converge to a sample flowing in the minute channel 1230a inside the microchip 1230 and using the photodetector (PD) 1234 to measure the intensity of fluorescence emitted from a solute in the test sample having absorbed the irradiated light. In this fluorescence detection method as well, the excitation light 1451 to be irradiated is modulated to a predetermined frequency by the modulator 1235 so as to make the separation of noise and a signal easier.

The lock-in amplifier as the minute signal detecting device 1236 extracts a frequency component corresponding to a test sample solution from a measurement signal detected by the photodetector (PD) 1234, and an information processing apparatus 1237 such as a personal computer (PC) analyzes the intensity of the extracted frequency component to find the concentration of the test sample solution (see e.g. Japanese Laid-Open Patent Publication (Kokai) No. H2002-365252).

It should be noted that in conventional spectroscopic analysis, quantitative analysis of a measured substance is performed by plotting wavelengths and absorptions are plotted along the horizontal axis and the vertical axis, respectively, and measuring absorption with respect to each wavelength.

However, in the microchemical system 1300, since the lock-in amplifier detects minute amplitudes of the probe light 1341, only one wavelength is used as the excitation light 1451, and hence identification i.e. qualitative analysis of a measured substance cannot be performed although quantitative analysis of the measured substance can be performed.

Moreover, the microchemical system 1300 has the problem that, although qualitative analysis of a measured substance can be performed by sequentially irradiating lights with wavelengths of three colors e.g. red, green, and blue on a measured substance to measure the measured substance and obtaining detection data at these three different wavelengths, the measured substance cannot be measured at a time because lights with wavelengths of the three colors i.e. red, green, and blue are irradiated in order.

Moreover, when the lock-in amplifier extracts a desired frequency component from a measurement signal, a reference signal is always required.

Moreover, since the lock-in amplifier is configured to extract a frequency component corresponding to one reference signal, only one frequency component corresponding to a reference signal can be extracted in a case where a plurality of frequency components are mixed in a measurement signal, and hence lock-in amplifiers corresponding in number to the number of samples are required so as to measure the concentrations of a plurality of samples.

Further, since the dynamic reserve of the lock-in amplifier is fixed, the user has to adjust the measurement range to an optimum value according to the intensity of a measurement signal.

In addition, since the lock-in amplifier is expensive and large in size, the cost and size of the entire measurement system are increased.

A first object of the present invention is to provide a detection method that makes it possible to measure a plurality of measured substances in a fluid test sample at the same time, easily perform qualitative analysis and quantitative analysis, and reduce measurement errors between excitation energies of the measured substances, and a microchemical system using the detection method.

A second object of the present invention is to provide a signal detection method, a thermal lens spectroscopic system, a fluorescence detection system, a signal detection apparatus, a signal detection system, a signal detection program, and a storage medium storing the program, which can easily extract one or more frequency components included in a measurement signal.

### Disclosure of Invention

To attain the above first object, in a first aspect of the present invention, there is provided a detection method comprising an applying step of applying a plurality of excitation energies with different frequencies to measured substances, and a detecting step of detecting changes in physical quantity based on physicochemical changes in the measured substances caused by the applied excitation energies with respect to individual frequency components of the excitation energies at the same time.

In the first aspect of the present invention, it is preferred that the detection method comprises a Fourier transformation step of carrying out Fourier transformation of the detected change in physical quantity with respect to individual frequency components of the excitation energies.

In the first aspect of the present invention, it is preferred that the excitation energies are comprised of excitation lights.

To attain the above first object, in a second aspect of the present invention, there is provided a detection method comprising a probe light irradiating step of irradiating a probe light on measured substances, an excitation light irradiating step of irradiating a plurality of flashing excitation lights with different frequencies on the measured substances at the same time, and a detecting step of detecting the probe light refracted by a thermal lens formed by the irradiated flashing excitation lights with respect to individual frequency components of the flashing excitation lights at the same time.

In the second aspect of the present invention, it is preferred that the detection method comprises a Fourier transformation step of carrying out Fourier transformation of a signal of the detected probe light with respect to individual frequency components of the flashing excitation lights.

To attain the above first object, in a third aspect of the present invention, there is provided a detection method comprising an excitation light irradiation step of irradiating a plurality of flashing excitation lights with different frequencies on a measured substance, and a detection step of detecting fluorescences generated by the irradiated excitation lights with respect to individual frequency components of the excitation lights at the same time.

In the third aspect of the present invention, it is preferred that the detection method comprises a Fourier transformation step of carrying out Fourier transformation of a signal of the detected fluorescences with respect to individual frequency components of the flashing excitation lights.

To attain the above first object, in a fourth aspect of the present invention, there is provided a microchemical system using a detection method according to claim 1.

To attain the above second object, in a fifth aspect of the present invention, there is provided a signal detection method which comprises an input step of inputting a signal, a fast Fourier transformation step of carrying out fast Fourier transformation on the input signal, and an output step of outputting a frequency spectrum of the signal on which the fast Fourier transformation has been carried out, the signal detection method comprising a detection step of detecting magnitudes of peak waveforms in a predetermined frequency band from the output frequency spectrum.

In the fifth aspect of the present invention, it is preferred that the width of the predetermined frequency band is 500 Hz or less.

In the fifth aspect of the present invention, it is preferred that the width of the predetermined frequency band is 100 Hz or less.

In the fifth aspect of the present invention, it is preferred that the width of the predetermined frequency band is 10 to 100 Hz.

In the fifth aspect of the present invention, it is preferred that the signal detection method is for use with a detection system that repeatedly induces a physical phenomenon at a predetermined frequency and detects changes in the physical phenomenon.

In the fifth aspect of the present invention, it is preferred that the detection system comprises a thermal lens spectroscopic system or a fluorescence detection system.

In the fifth aspect of the present invention, it is preferred that the magnitudes of the peak waveforms are peak values.

In the fifth aspect of the present invention, it is preferred that the magnitudes of the peak waveforms are an integrated values of peaks.

To attain the above second object, in a sixth aspect of the present invention, there is provided a thermal lens spectroscopic system using a signal detection method in the fifth aspect of the present invention.

To attain the above second object, in a seventh aspect of the present invention, there is provided a fluorescence detection system using a signal detection method in the fifth aspect of the present invention.

To attain the above second object, in an eighth aspect of the present invention, there is provided a signal detection apparatus which comprises an input unit adapted to input a signal, a fast Fourier transformation unit adapted to carry out fast Fourier transformation on the input signal, and an output unit adapted to output a frequency spectrum of the signal on which the fast Fourier transformation has been carried out, the signal detection apparatus comprising a detection unit adapted to detect magnitudes of peak waveforms in a predetermined frequency band from the output frequency spectrum.

In the eighth aspect of the present invention, it is preferred that the width of the predetermined frequency band is 500 Hz or less.

In the eighth aspect of the present invention, it is preferred that the width of the predetermined frequency band is 100 Hz or less.

In the eighth aspect of the present invention, it is preferred that the width of the predetermined frequency band is 10 to 100 Hz.

In the eighth aspect of the present invention, it is preferred that the signal detection apparatus constitutes a part of a detection system that repeatedly induces a physical phenomenon at a predetermined frequency and detects changes in the physical phenomenon.

In the eighth aspect of the present invention, it is preferred that the detection system comprises a thermal lens spectroscopic system or a fluorescence detection system.

In the eighth aspect of the present invention, it is preferred that the input unit is comprised of an audio input terminal.

In the eighth aspect of the present invention, it is preferred that the magnitudes of the peak waveforms are peak values.

In the eighth aspect of the present invention, it is preferred that the magnitudes of the peak waveforms are integrated values of peaks.

To attain the above second object, in a ninth aspect of the present invention, there is provided a signal detection system including a signal detection apparatus in the sixth aspect of the present invention, comprising a plurality of light sources, and a modulator adapted to modulate lights output from the plurality of light sources using different frequencies, wherein the modulated lights are irradiated on respective samples, signals generated by the irradiation are input to the input unit at the same time, the fast Fourier transformation unit carries out fast Fourier transformation of the input signals at the same time, and the detecting unit detects magnitudes of peak waveforms in the predetermined frequency band at respective frequencies corresponding to the respective different frequencies.

In the ninth aspect of the present invention, it is preferred that the spacing between the different frequencies is from no less than 30 Hz to no more than 200 Hz.

In the ninth aspect of the present invention, it is preferred that the spacing between the different frequencies is no less than 50 Hz to no more than 200 Hz.

In the ninth aspect of the present invention, it is preferred that the spacing between the different frequencies is from no less than 100 Hz to no more than 200 Hz.

In the ninth aspect of the present invention, it is preferred that the signal detection system comprises one photoelectric conversion element, and optical fibers that connect the optical conversion element and the samples to each other.

To attain the above second object, in a tenth aspect of the present invention, there is provided a signal detection program which comprises an input module for inputting a signal, fast Fourier transformation module for carrying out fast Fourier transformation on the input signal, and an output module for outputting a frequency spectrum of the signal on which the fast Fourier transformation has been carried out, the signal detection program comprising a detection module for detecting magnitudes of peak waveforms in a predetermined frequency band from the output frequency spectrum.

In the tenth aspect of the present invention, it is preferred that the width of the predetermined frequency band is 500 Hz or less.

In the tenth aspect of the present invention, it is preferred that the width of the predetermined frequency band is 100 Hz or less.

In the tenth aspect of the present invention, it is preferred that the width of the predetermined frequency band is 10 to 100 Hz.

In the tenth aspect of the present invention, it is preferred that the magnitudes of the peak waveforms are peak values.

In the tenth aspect of the present invention, it is preferred that the magnitudes of the peak waveforms are integrated values of peaks.

To attain the above second object, in an eleventh aspect of the present invention, there is provided a computer-readable storage medium storing a program in the tenth aspect of the present invention.

### Brief Description of Drawings

FIG. 1 is a view schematically showing the construction of a thermal lens spectroscopic system to which a detection method according to a first embodiment of the present invention is applied.
FIG. 2 is a graph showing the results of FFT computations performed on the measured substance sample measured by the thermal lens spectroscopic system in FIG. 1, in which the abscissa indicates frequencies, and the ordinate indicates signal intensities of corresponding frequency components.
FIG. 3 is a block diagram schematically showing the construction of a thermal lens spectroscopic system in which a signal detection method according to a second embodiment of the present invention is carried out.
FIG. 4 is a flow chart showing the procedure of a minute signal detecting process carried out by a PC appearing in FIG. 3.
FIG. 5 is a graph showing a frequency spectrum obtained through conversion by FFT processing in FIG. 4.
FIG. 6 is a diagram useful in explaining how peaks are detected.
FIGS. 7A and 7B are diagrams useful in explaining calibration curves based on peak values detected using the signal detection method according to the second embodiment of the present invention, wherein FIG. 7A shows a calibration curve obtained by the minute signal detection process (FFT process) in FIG. 4, and FIG. 7B shows a calibration curve obtained by a conventional lock-in amplifier.
FIG. 8 is a diagram showing a state in which peaks detected by peak detection in FIG. 4 are overlapped and unseparated.
FIG. 9 is a diagram showing a state in which peaks detected by peak detection in FIG. 4 are separated.
FIG. 10 is a diagram showing a state in which a fundamental harmonic and a secondary harmonic appear as a result of peak detection in FIG. 4.
FIG. 11 is a block diagram schematically showing the construction of a fluorescence detection system in which the signal detection method according to the second embodiment of the present invention is carried out.
FIG. 12 is a diagram schematically showing the construction of a conventional thermal lens spectroscopic system.
FIG. 13 is a diagram showing a state in which probe light is irradiated in the conventional thermal lens spectroscopic system.
FIG. 14 is a diagram showing a state in which probe light and excitation light are irradiated in the conventional thermal lens spectroscopic system.
FIG. 15 shows diagrams useful in explaining an excitation light and a probe light in the conventional thermal lens spectroscopic system. In FIG. 15, (a) shows output timing of excitation light, (b) shows a signal of probe light detected in a case where a measured substance has a high concentration, and (c) shows a signal of probe light detected in a case where a measured substance has a low concentration.
FIG. 16 shows diagrams useful in explaining an excitation light and a probe light in the conventional thermal lens spectroscopic system. In FIG. 16, (a) shows output timing of excitation light, (b) shows a signal of probe light detected in a case where a measured substance has a high concentration, and (c) shows a signal of probe light detected in a case where a measured substance has a low concentration.

### Best Mode of Carrying Out the Invention

A description will now be given of a detection method according to a first embodiment of the present invention with reference to the drawings.

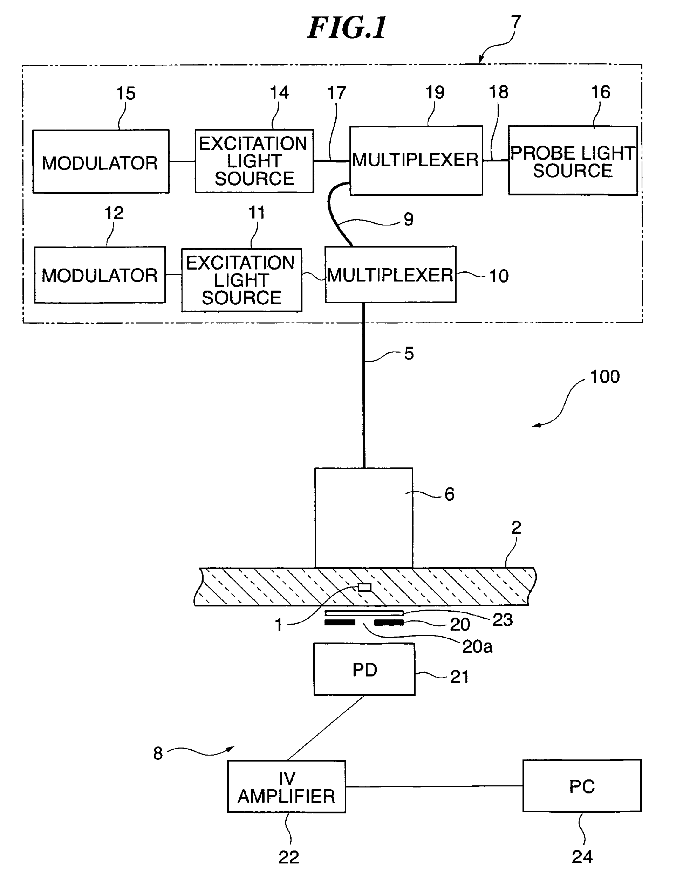

FIG. 1 is a view schematically showing the construction of a thermal lens spectroscopic system to which the detection method according to the first embodiment is applied.

As shown in FIG. 1, the thermal lens spectroscopic system 100 is comprised of a microchemical chip 2 having therein a minute channel 1 into which a fluid test sample is injected; a cylindrical gradient index rod lens 6 that is disposed on the microchemical chip 2 and above the minute channel 1 and causes light transmitted through an optical fiber 5 to converge to the minute channel 1 to generate a thermal lens signal; a light source unit 7 that is connected to the optical fiber 5 and irradiates excitation light on the fluid test sample in the minute channel 1 of the microchemical chip 2 via the optical fiber 5 and irradiating probe light on a thermal lens generated in the fluid test sample by the irradiated excitation light; and a detection device 8 that is disposed below the microchemical chip 2 and detects the probe light via the thermal lens generated in the fluid test sample in the minute channel 1 of the microchemical chip 2 by the excitation light irradiated from the light source unit 7.

The microchemical chip 2 has the minute channel 1 into which a fluid test sample is poured when the thermal lens spectroscopic system 100 carries out mixture, agitation, synthesis, separation, extraction, detection, etc. of a fluid test sample.

In terms of durability and chemical resistance, the microchemical chip 2 is preferably made of glass, and further, in consideration of a biological sample such as a cell for use, for example, in DNA analysis, the microchemical chip 2 is preferably made of boron silicate glass, soda lime glass, alumino boron silicate glass, silica glass, or the like. The microchemical chip 2, however, may be made of organic matter such as plastic in a limited range of uses.

The optical unit 7 is comprised of an excitation light source 11 that outputs an excitation light; a modulator 12 connected to the excitation light source 11, for modulating excitation light with a wavelength of, for example, 532 nm output from the excitation light source 11 so that it flashes (on and off) with a duty factor of 50% and at 1.2 kHz, for example; an excitation light source 14 that outputs an excitation light; a modulator 15 that is connected to the excitation light source 14 and modulates excitation light with a wavelength of, for example, 658 nm output from the excitation light source 14 so that it flashes (on and off) with a duty factor of 50% and at 1 kHz, for example; a probe light source 16 that carries out CW (continuous wave) oscillation of probe light with a wavelength of, for example, 780 nm; a multiplexer 19 that is connected with the excitation light source 14 and the probe light source 16 via optical fibers 17 and 18, respectively, and combines excitation light output from the excitation light source 14 and probe light output from the probe light source 16 and causes resultant light to enter an optical fiber 9; and a multiplexer 10 that is connected to the excitation light source 11 and the multiplexer 19 and combines excitation light output from the excitation light source 11 and multiplexed light output from the multiplexer 19 and causes resultant light to enter the optical fiber 5.

The detection device 8 is comprised of a transmission member 20 formed with a pinhole 20a that passes only part of light; a filter 23 that is disposed between the transmission member 20 and the microchemical chip 2 and does not pass excitation light but passes only probe light; a photodetector (PD) 21 that is disposed below the transmission member 20 and at such a location as to face the minute channel 1 and detects the quantities of excitation light and probe light and the intensity of a thermal lens signal; and a personal computer (PC) 24 connected to the photodetector (PD) 21 via an IV amplifier 22.

A probe light with a wavelength of 780 nm CW-oscillated from the probe light source 16 was irradiated on a measured substance in the minute channel 1, excitation lights with respective wavelengths of 658 nm and 532 nm were modulated into flashing excitation lights at respective frequencies of 1 kHz and 1.2 kHz and a duty factor of 50 % and irradiated on the measured substance in the minute channel 1, the probe light induced from the irradiated flashing excitation lights was detected by the PD 21, and a signal of the detected probe light was guided to the PC 24 as a signal processing apparatus via the IV amplifier 22. The PC 24 carried out FFT (fast Fourier transformation) processing to measure signal intensities of respective frequency components.

It should be noted that as a measured substance sample, a solution obtained by mixing equal volumes of a 1 × 10⁻⁵ mol/L solution of Ni phthalocyanine tetrasulfonic acid 4Na salt (Ni complex) and a 1 × 10⁻⁴ mol/L solution of sunset yellow is used, and the measured substance sample is poured into a channel which is the minute channel with a depth of 100 µm fabricated inside the microchemical chip.

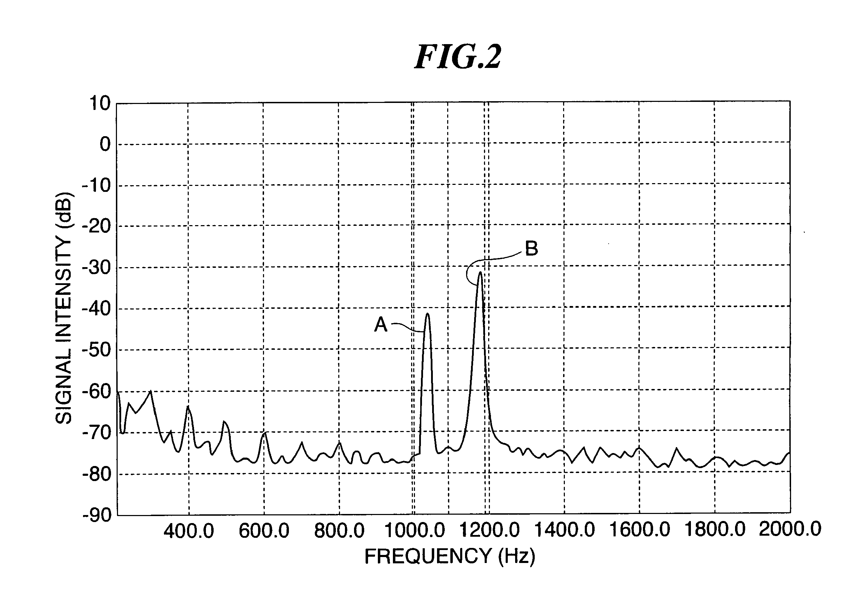

FIG. 2 is a graph showing the result of FFT computations performed on the measured substance sample measured by the thermal lens spectroscopic system in FIG. 1, in which the abscissa indicates frequencies, and the ordinate indicates signal intensities of corresponding frequency components.

In FIG. 2, since two frequency components are clearly separated, the signal intensity of a signal B dependent on the concentration of the sunset yellow solution absorbed at a wavelength of 532 nm and a signal A dependent on the concentration of the Ni complex solution absorbed at a wavelength of 658 nm can be measured.

According to the first embodiment of the present invention, a probe light with a wavelength of 780 nm is irradiated on a measured substance inside the minute channel 1, and excitation lights with respective wavelengths of 658 nm and 532 nm are modulated into a plurality of flashing excitation lights with respective frequencies 1 kHz and 1.2 kHz and a duty factor of 50 % and irradiated on the measured substance inside the minute channel 1. Then, the probe light refracted by a thermal lens induced from the irradiated flashing excitation lights is detected at the same time by the photodetector 21 with respect to each frequency component of the flashing excitation light and guided to the PC 24 as a signal processing apparatus via the IV amplifier 22 and are subjected to FFT (fast Fourier transformation) by the PC 24, and hence a plurality of measured substances inside a fluid test sample can be measured at the same time, and qualitative analysis and quantitative analysis can be conducted with ease, and measurement errors in excitation energies of the measured substances can be reduced.

In the conventional thermal lens spectroscopic system, quantitative analysis can be conducted only based upon absorption at a specific wavelength, whereas according to the first embodiment, excitation lights with different wavelengths can be used, and thus, not only quantitative analysis of measured substances but also qualitative analysis of measured substances can be conducted.

Although in the first embodiment, a combination of flashing of excitation lights and frequency analysis is applied to the thermal lens spectroscopic system, this is not limited to this, but it may be applied to fluorescence measurement. In the case where a combination of flashing of excitation light and frequency analysis is applied to fluorescence measurement, by modulating flashing excitation lights with different wavelengths respectively, fluorescent signals dependent on respective frequencies of the excitation lights with the different wavelengths can be detected. In general, in detecting fluorescent signals, measurements by integration of signal intensities using a highly-sensitive detection device without modulating excitation lights are made in many cases since the background is small, whereas measurements by causing excitation lights to flash and observing amplitudes through lock-in detection or the like are less likely to be made.

Although in the first embodiment, a combination of flashing of excitation light and frequency analysis is applied to the thermal lens spectroscopic system, this is not limited to this, but it may be applied to one which changes of which reaction mode varies according to the magnitude of energy (photon energy, i.e. wavelength and electric energy) applied by electrochemical reaction. Specifically, for example, in a case where a physicochemical change a occurs when energy greater than a threshold value A is applied to a predetermined measured substance sample, and a physicochemical change b occurs when energy greater than a threshold value B is applied to the measured substance sample, if the energy between the threshold values A and B is applied with a certain frequency, and on the other hand, the energy greater than the threshold value B is applied with another frequency, changes in physical quantity based on the physicochemical changes a and b of the measured substance sample can be detected at the same time with respect to individual frequency components of the energy. Therefore, a plurality of reactions can be measured at the same time from one and the same point, and hence the amount of information at the time of measurement can be dramatically increased.

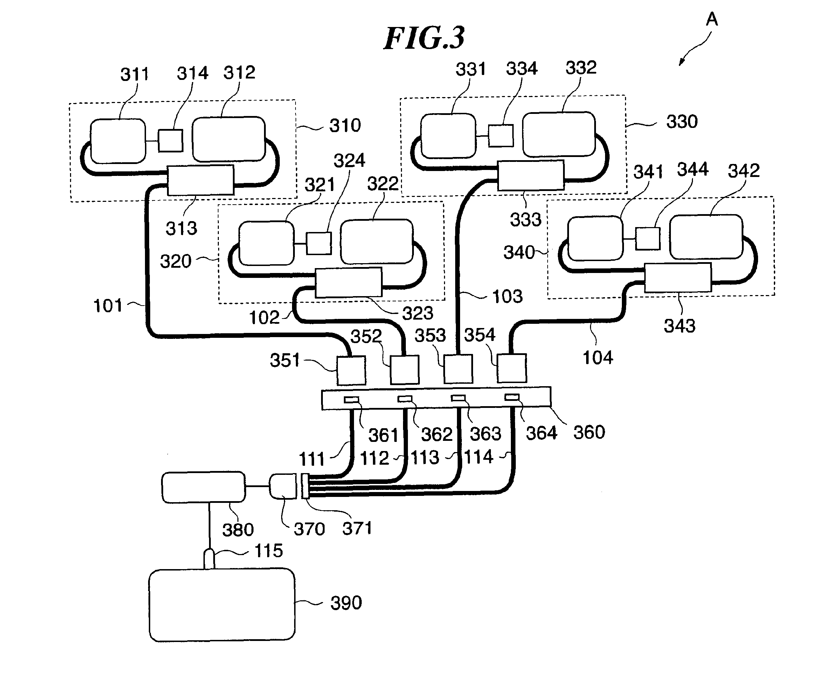

FIG. 3 is a block diagram schematically showing the construction of a thermal lens spectroscopic system in which a signal detection method according to a second embodiment of the present invention is carried out. It is to be understood, however, that the present invention is not limited to the second embodiment described below.

As shown in FIG. 3, a thermal lens spectroscopic system A is comprised of a first light source unit 310 that is comprised of an excitation light source 311 that outputs an excitation light, a modulator 314 that modulates the excitation light using a predetermined modulation frequency F1, a probe light source 312 that outputs a probe light which is continuous light, and a multiplexer 313 that combines the modulated excitation light incident on an optical fiber and the output probe light; a second light source unit 320 that is comprised of an excitation light source 321 that outputs an excitation light, a modulator 324 that modulates the excitation light using a predetermined modulation frequency F2, a probe light source 322 that outputs a probe light which is continuous light, and a multiplexer 323 that combines the modulated excitation light incident on an optical fiber and the output probe light; a third light source unit 330 that is comprised of an excitation light source 331 that outputs an excitation light, a modulator 334 that modulates the excitation light using a predetermined modulation frequency F3, a probe light source 332 that outputs a probe light which is continuous light, and a multiplexer 333 that combines the modulated excitation light incident on an optical fiber and the output probe light; and a fourth light source unit 340 that is comprised of an excitation light source 341 that outputs an excitation light, a modulator 344 that modulates the excitation light with a predetermined modulation frequency F4, a probe light source 342 that outputs a probe light which is continuous light, and a multiplexer 343 that combines the modulated excitation light incident on an optical fiber and the output probe light.

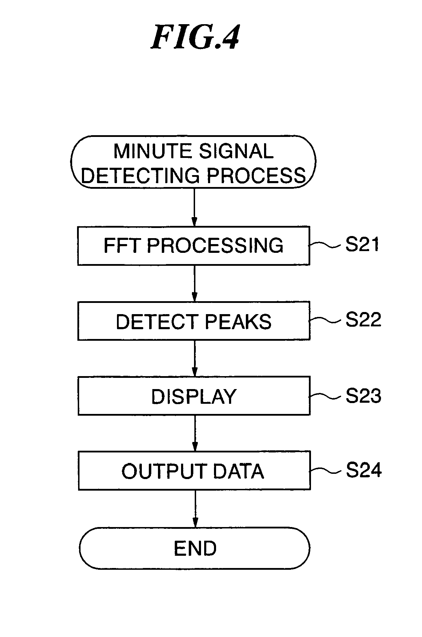

The thermal lens spectroscopic system A is further comprised of optical fibers 101, 102, 103, and 104 that transmit the excitation lights and the probe lights combined by the multiplexers 313, 323, 333, and 343; probes (SELFOC micro lenses (SML) (registered trademark)) 351, 352, 353, and 354 that irradiate the excitation lights and the probe lights transmitted by the optical fibers 101, 102, 103, and 104 on test samples 361, 362, 363, and 364 injected into a minute channel inside a microchemical chip 360; optical fibers 111, 112, 113, and 114 that receive the probe lights transmitted through the test samples 361, 362, 363, and 364; a photodiode 370 that carries out photoelectric conversion of the probe lights transmitted by the optical fibers 111, 112, 113, and 114 and outputs signals corresponding to intensities of the probe light; an IV amplifier 380 that carries out current-to-voltage conversion and amplification of the output signals and outputs resultant signals as measurement signals; and a PC 390 (signal detection apparatus) that carries out a minute signal detecting process (described later with reference to FIG. 4) on the measurement signals input from the IV amplifier 380.

A filter 371 for cutting excitation lights irradiated on and transmitted through the test samples 361, 362, 363, and 364 is disposed in front of locations at which light enters the optical fibers 111, 112, 113, and 114, or between the optical fibers 111, 112, 113, and 114 and the photodiode 370.

The IV amplifier 380 is connected to an audio input terminal, not shown, of the PC 390 via a microphone jack 115.

Here, the audio input terminal means an input element for use in carrying out digital conversion of a signal flowing as an analog signal into data that can be processed as audio by the PC 390, and examples of the audio input terminal include a microphone terminal, a PC card-type input terminal, a USB-type input terminal, and a board-type input terminal.

More specifically, a terminal attached to the PC 390 may be used as a microphone terminal, a DAVOXL made by I.O. DATA DEVICE, INC. or the like may be used as a USB-type terminal include, a PCMCIA Sound Blaster Audigy 2 ZS Notebook made by Creative Technology Ltd. or the like may be used as a PC card-type terminal, and a Sound Blaster Audigy 2 ZS Digital Audio made by Creative Technology Ltd. or the like may be used as a board-type terminal.

Also, without the use of these terminals, an analog-to-digital conversion element (AD converter) may be used to convert an analog signal into a digital signal, and the obtained digital signal may be captured into the PC 390 and converted into sound using software.

The excitation lights modulated using the respective modulation frequencies F1, F2, F3, and F4 and irradiated on the respective samples 361, 362, 363, and 364 form thermal lenses inside the respective test samples 361, 362, 363, and 364 to produce thermal lens effects. The probe lights irradiated on the respective samples 361, 362, 363, and 364 are refracted by the respective thermal lenses. Since the thermal lenses are formed by the excitation lights modulated using the modulation frequencies F1, F2, F3, and F4, the probe light transmitted through the thermal lenses are modulated using frequencies equal to the respective modulation frequencies F1, F2, F3, and F4. The probe lights having intensities corresponding to concentrations of the test samples 361, 362, 363, and 364 and modulated using the frequencies equal to the respective modulation frequencies F1, F2, F3, and F4 enter the optical fibers 111, 112, 113, and 114. The probe lights incident on the respective optical fibers 111, 112, 113, and 114 are photoelectrically converted by being collectively irradiated on the photodiode 370 and then output as one electric signal including four frequency components having intensities corresponding to the respective concentrations of the test samples 361, 362, 363, and 364 to the IV amplifier 380. The output electric signal is current-to-voltage converted and amplified by the IV amplifier 380 and output as a measurement signal.

The measurement signal output from the IV amplifier 380 is input as an audio signal to the PC 390 via the microphone jack 115 connected to the audio input terminal of the PC 390. Thus, there is no need to have an A/D converter ready in connecting the IV amplifier 380 and the PC 390 to each other, and hence the cost of the thermal lens spectroscopic system A can be kept low.

FIG. 4 is a flow chart showing the procedure of the minute signal detecting process carried out by the PC appearing in FIG. 3.

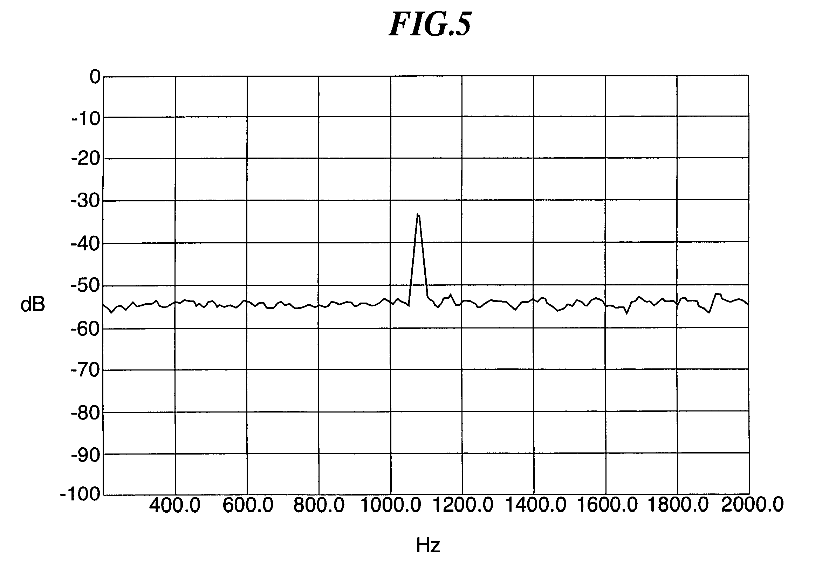

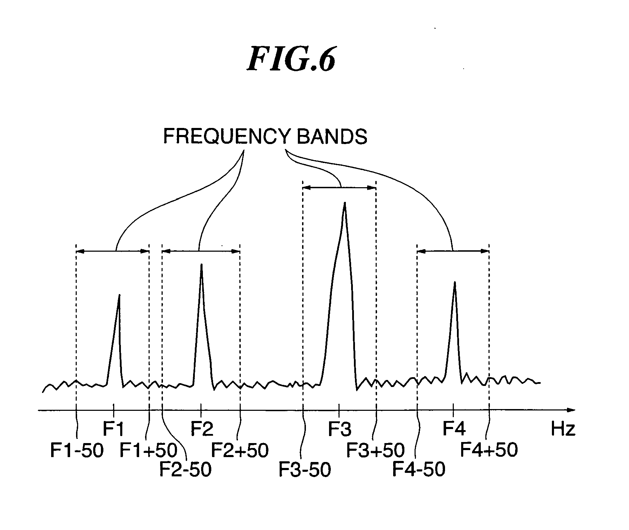

As shown in FIG. 4, the PC 390 carries out frequency analysis of the measurement signal output from the IV amplifier 380 through fast-Fourier-transformation (hereinafter referred to as "FFT") to converts it into a frequency spectrum (FIG. 5) in which the abscissa indicates frequencies and the ordinate indicates measurement signal intensities expressed in decibel (dB) (step S21), detects peak values in frequency ranges of plus or minus 50 Hz of the modulation frequencies F1, F2, F3, and F4 (for example, a frequency range of 950 to 1050 Hz if the modulation frequency F is 1000 Hz) as shown in FIG. 6 (step S22), displays a graph showing aging changes in the detected peak values, that is, a graph in which the ordinate indicates peak values and the abscissa indicates time (step S23), and outputs data of the displayed graph as a CSV file (step S24), followed by terminating the process.

In the step S21, since the intensities of the measurement signal subjected to fast Fourier transformation are expressed in decibels. Thus, a measurement signal with a wide range of intensities can be detected, and hence even if intensity differences of a measurement signal are great, peak values can be reliably detected without adjusting measurement ranges according to the intensities of the measurement signal, which has been required by a lock-in amplifier.

In the step S22, since the PC 390 detects the peak values in the frequency ranges of plus or minus 50 Hz of the modulation frequencies F1, F2, F3, and F4 (predetermined frequency ranges), the frequency components corresponding to the test samples 361, 362, 363, and 364 can be reliably extracted from the measurement signal.

In the step S23, a graph in which aging changes in peak values in different frequency ranges are expressed on the same time axis can be displayed.

According to the process of FIG. 4, since the PC 390 carries out frequency analysis of a measurement signal output from the IV amplifier 380 through FFT and converts it into a frequency spectrum (step S21) and detects peak values in the frequency ranges of plus or minus 50 Hz of the modulation frequencies F1, F2, F3, and F4 from the frequency spectrum (step S22), frequency components with intensities corresponding to the concentrations of the test samples 361, 362, 363, and 364 can be extracted at the same time and with ease from a measurement signal without using a reference signal as in a case where a lock-in amplifier is used, and hence the concentrations of the test samples 361, 362, 363, and 364 can be measured at the same time and with ease.

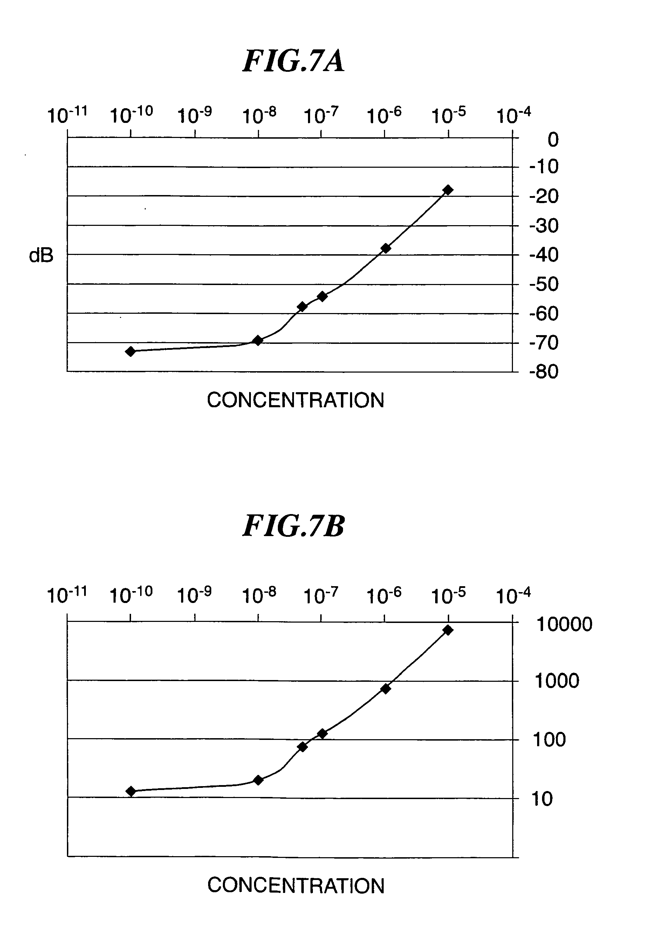

FIGS. 7A and 7B are diagrams useful in explaining calibration curves based on peak values detected using the signal detection method according to the embodiment of the present invention, wherein FIG. 7A shows a calibration curve obtained by the minute signal detection process (FFT process) in FIG. 4, and FIG. 7B shows a calibration curve obtained by a conventional lock-in amplifier.

As shown in FIGS. 7A and 7B, the calibration curve obtained by the minute signal detection process (FFT process) in FIG. 4 and the calibration curve obtained by the conventional lock-in amplifier have substantially the same shape. Thus, it can be said that, in the minute signal detection method in FIG. 4, the concentration of the test samples 361, 362, 363, and 364 can be found with the same level of accuracy as in a minute signal detection process using the conventional lock-in amplifier.

According to the present embodiment, since peak values in the frequency ranges of plus or minus 50 Hz of the modulation frequencies F1, F2, F3, and F4 from the frequency spectrum, frequency components with intensities corresponding to the concentrations of the test samples 361, 362, 363, and 364 can be extracted at the same time and with ease from a measurement signal without using a reference signal as in a case where a lock-in amplifier is used, and hence the concentrations of the samples 361, 362, 363, and 364 can be measured at the same time and with ease.

According to the second embodiment, since the PC 390 detects peak values in the frequency ranges of plus or minus 50 Hz of the modulation frequencies F1, F2, F3, and F4 from the frequency spectrum, the need to provide a lock-in amplifier in the thermal lens spectroscopic system A can be eliminated, and hence the cost and size of the thermal lens spectroscopic system A can be reduced.

According to the second embodiment, since the photodiode 370 detects a plurality of probe lights transmitted through the respective test samples 361, 362, 363, and 364, one PC 390 can extract frequency components having intensities corresponding to the respective concentrations of the plurality of test samples 361, 362, 363, and 364, and hence one PC 390 can measure the concentrations of the plurality of samples 361, 362, 363, and 364.

Although in the second embodiment, peak values are extracted from a frequency spectrum, there is no intention to limit the invention to this, but differences between peak values and white noise values and the integral of peaks may be detected from a frequency spectrum. Thus, it is possible to cope with states of measurement signal in a flexible manner.

Although in the second embodiment, a graph showing aging changes in detected peak values is displayed (step S23), there is no intention to limit the invention to this, but a frequency spectrum obtained in the step S21 may be displayed as it is. Moreover, a calibration curve created based on the results of measurement on a plurality of test samples having known concentrations may be displayed as shown in FIGS. 7A and 7B. Based upon this calibration curve, a user can find the concentrations of the test samples 361, 362, 363, and 364 from detected peak values.

Although in the second embodiment, frequency ranges in which peak values are detected are the frequency ranges of plus or minus 50 Hz of the modulation frequencies F1, F2, F3, and F4, this has only to be plus or minus 250 Hz or less and may also be narrowed to a range of plus or minus 50 Hz, plus or minus 20 Hz, more narrowly, plus or minus 5 Hz, and still more narrowly, plus or minus 1Hz of the modulation frequencies F1, F2, F3, and F4, depending on the measurement environment such as its white noise level etc. In this case, peak values can be reliably detected even in a case where peak values in frequency ranges corresponding to the test samples 361, 362, 363, and 364 are minute, or in a case where the spacing between the modulation frequencies F1, F2, F3, and F4 is small.

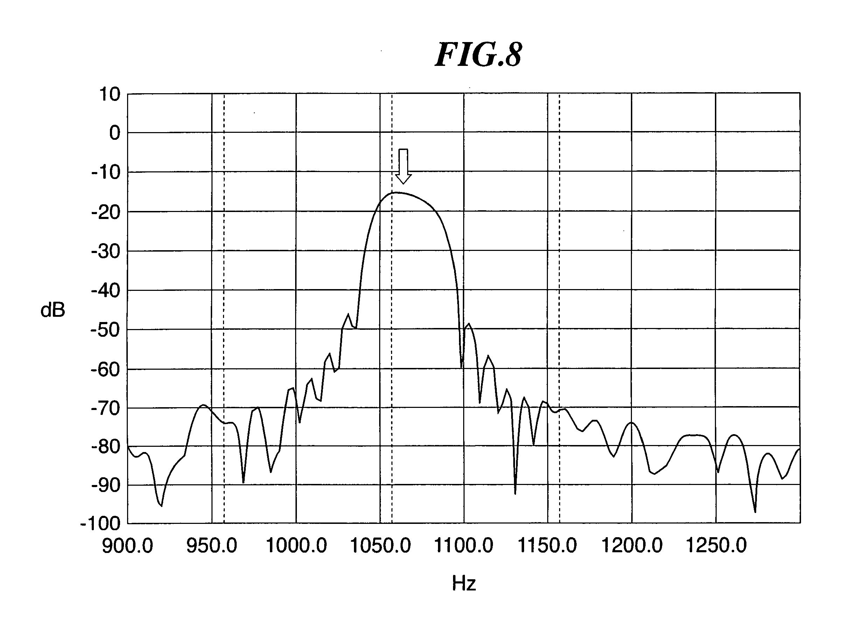

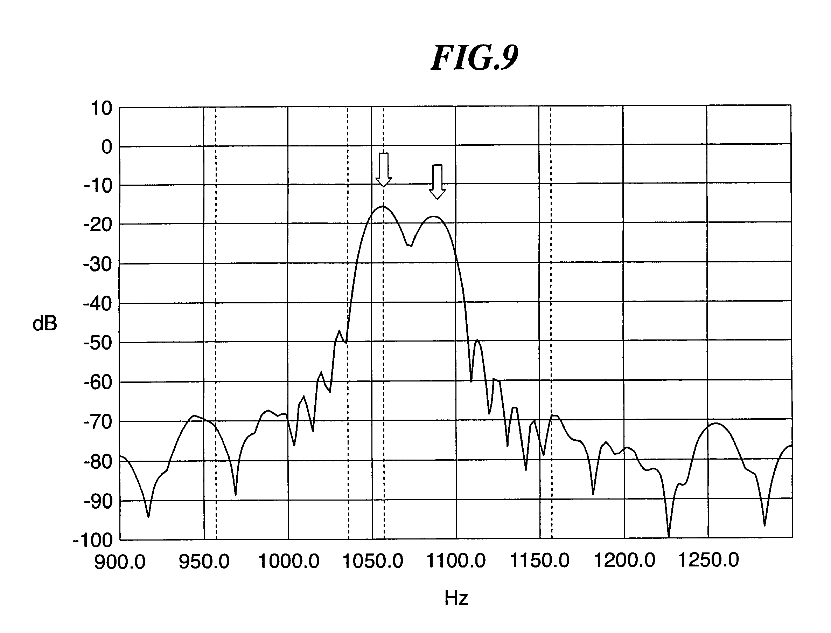

It is preferred that the spacing between the modulation frequencies F1, F2, F3, and F4 is 100 Hz or greater. If the spacing between the modulation frequencies F1, F2, F3, and F4 is too small, two peaks are overlapped and cannot be separated (for example, FIG. 8). Moreover, if the spacing between the modulation frequencies F1, F2, F3, and F4 is large, peaks can be easily separated at the time of peak detection (for example, FIG. 9), but only a small number of frequencies can be inserted into a predetermined frequency band, and hence only a small number of test samples can be measured at the same time. This is because, due to the influence of a secondary harmonic and a tertiary harmonic of the lowest modulation frequency F1, it is necessary to set modulation frequencies for all the frequencies lower than the frequency of the secondary harmonic of the modulation frequency F1. Thus, it is preferred that the spacing between the modulation frequencies F1, F2, F3, and F4 is set to be narrowest within the bounds of detecting peaks in a manner being separated.

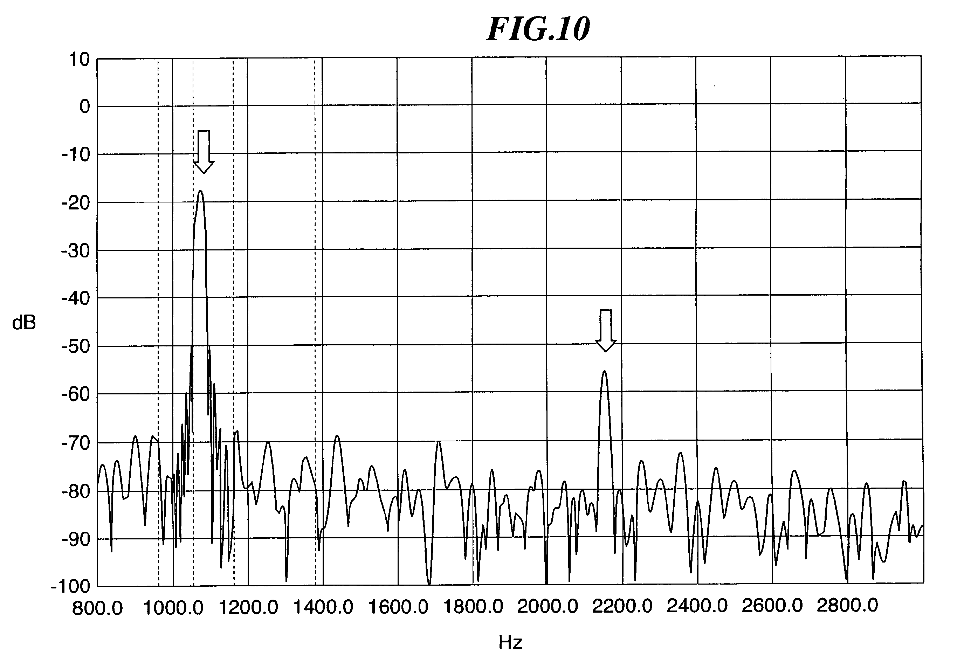

Specifically, assuming that the lowest modulation frequency F1 is 1 kHz, the secondary harmonic of the modulation frequency F1 appears at 2 kHz (FIG. 10). If the spacing between the modulation frequencies F1, F2, F3, and F4 is set to 100 Hz, only 9 modulation frequencies can be inserted between the lowest modulation frequency F1 of 1 kHz and the secondary harmonic's frequency of 2 kHz, and hence up to only 10 samples can be measured at the same time. Here, if the spacing between the modulation frequencies F1, F2, F3, and F4 is set to 50 Hz, 19 modulation frequencies can be inserted between the lowest modulation frequency F1 of 1 kHz and the secondary harmonic's frequency of 2 kHz, and hence up to 20 samples can be measured at the same time.

It should be noted that the reason why the lowest modulation frequency F1 is set to 1 kHz is that, although a thermal lens signal becomes greater as the modulation frequency lowers, the sensitivity (SN) deteriorates due to heat relaxation if the modulation frequency becomes too small. This tendency applies not only to a thermal lens measurement but also to a fluorescence measurement.

In the minute signal detecting process (FFT process), the frequency resolution varies according to the sampling frequency (sampling interval) at which signals are captured, and the number of samplings for use in one calculation. For this reason, the ease of peak separation varies according to measurement conditions. Moreover, the ease of peak separation varies according to a difference in height of adjacent peaks (caused by a difference in concentration) since adjacent peaks are overlapped in different ways according to their heights.

Table 1 indicates whether or not two signal peaks can be separated in a case where two test samples are measured at the same time using the modulation frequencies F1 and F2.

**Table 1**

| Sampling frequency | Number of samplings | F1 signal intensity | F2 signal intensity | Frequency spacing | Whether peaks can be separated |
|---|---|---|---|---|---|
| (kHz) | | (dB) | (dB) | (Hz) | |
| 44.1 | 4096 | -20 | -20 | 10 | × |
| 44.1 | 4096 | -20 | -20 | 20 | × |
| 44.1 | 4096 | -20 | -20 | 30 | ○ |
| 44.1 | 4096 | -20 | -20 | 40 | ○ |
| 44.1 | 4096 | -20 | -20 | 50 | ○ |
| 44.1 | 4096 | -20 | -20 | 100 | ○ |
| 44.1 | 4096 | -20 | -60 | 10 | × |
| 44.1 | 4096 | -20 | -60 | 20 | × |
| 44.1 | 4096 | -20 | -60 | 30 | × |
| 44.1 | 4096 | -20 | -60 | 40 | × |
| 44.1 | 4096 | -20 | -60 | 50 | ○ |
| 44.1 | 4096 | -20 | -60 | 100 | ○ |
| 100 | 4096 | -20 | -20 | 10 | × |
| 100 | 4096 | -20 | -20 | 20 | × |
| 100 | 4096 | -20 | -20 | 30 | ○ |
| 100 | 4096 | -20 | -20 | 40 | ○ |
| 100 | 4096 | -20 | -20 | 50 | ○ |
| 100 | 4096 | -20 | -20 | 100 | ○ |
| 100 | 4096 | -20 | -60 | 10 | × |
| 100 | 4096 | -20 | -60 | 20 | × |
| 100 | 4096 | -20 | -60 | 30 | × |
| 100 | 4096 | -20 | -60 | 40 | × |
| 100 | 4096 | -20 | -60 | 50 | × |
| 100 | 4096 | -20 | -60 | 100 | ○ |
| 44.1 | 32768 | -20 | -20 | 10 | × |
| 44.1 | 32768 | -20 | -20 | 20 | ○ |
| 44.1 | 32768 | -20 | -20 | 30 | ○ |
| 44.1 | 32768 | -20 | -20 | 40 | ○ |
| 44.1 | 32768 | -20 | -20 | 50 | ○ |
| 44.1 | 32768 | -20 | -20 | 100 | ○ |
| 44.1 | 32768 | -20 | -60 | 10 | × |
| 44.1 | 32768 | -20 | -60 | 20 | × |
| 44.1 | 32768 | -20 | -60 | 30 | ○ |
| 44.1 | 32768 | -20 | -60 | 40 | ○ |
| 44.1 | 32768 | -20 | -60 | 50 | ○ |
| 44.1 | 32768 | -20 | -60 | 100 | ○ |
| 100 | 32768 | -20 | -20 | 10 | × |
| 100 | 32768 | -20 | -20 | 20 | ○ |
| 100 | 32768 | -20 | -20 | 30 | ○ |
| 100 | 32768 | -20 | -20 | 40 | ○ |
| 100 | 32768 | -20 | -20 | 50 | ○ |
| 100 | 32768 | -20 | -20 | 100 | ○ |
| 100 | 32768 | -20 | -60 | 10 | × |
| 100 | 32768 | -20 | -60 | 20 | × |
| 100 | 32768 | -20 | -60 | 30 | ○ |
| 100 | 32768 | -20 | -60 | 40 | ○ |
| 100 | 32768 | -20 | -60 | 50 | ○ |
| 100 | 32768 | -20 | -60 | 100 | ○ |

As shown in Table 1, the sampling frequency, the number of samplings, the frequency spacing between the modulation frequency F1 and the modulation frequency F2 (the modulation frequency F1 is fixed at 1057 Hz, whereas the modulation frequency F2 is varied), the height of a peak signal of a test sample measured using the modulation frequency F1, and the height of a peak signal of a test sample measured using the modulation frequency F2 were varied. As is clear from Table 1, if the sampling frequency, the number of samplings, and the height of each peak signal vary, the minimum spacing between frequencies which enables separation varies. For this reason, in the minute signal detecting process (FFT process), it is preferred that the spacing between modulation frequencies is adjusted according to the kinds of samples to be measured, concentrations of samples, sampling conditions, and so on. Thus, it is preferred that the spacing between modulation frequencies is set to 100 Hz or greater so that two peaks can be separated under many conditions, but in a case where a number of samples are measured, it is preferred that the spacing between modulation frequencies is set to be as narrow as 50 to 100 Hz, and more narrowly, 30 to 50 Hz.

Moreover, it is preferred that the spacing between modulation frequencies is set to 200 Hz or less, and more preferably, 150 Hz or less because, if not so, only a small number of samples can be measured at the same time.

Although in the second embodiment of the present invention, a signal corresponding to intensities of probe lights transmitted through the samples 361, 362, 363, and 364 is input to the PC 390, there is no intention to limit the invention to this, but any signals may be used insofar as they are electric signals.

Although in the second embodiment of the present invention, there are provided a plurality of probe light sources 312, 322, 332, and 342, only one probe light source may be provided.

Further, although in the second embodiment of the present invention, a plurality of test samples are detected, only one sample may be detected in the same manner.

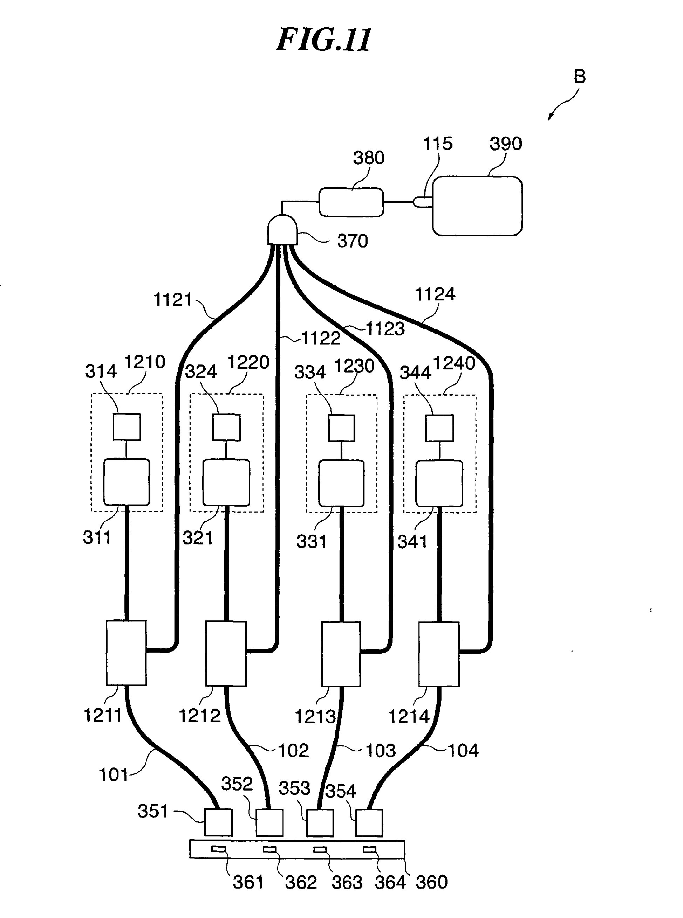

FIG. 11 is a block diagram schematically showing the construction of a fluorescence detection system in which the signal detection method according to the second embodiment of the present invention is carried out.

In FIG. 11, the same component members of a fluorescence detection system B, in which the signal detection method according to the second embodiment of the present invention is carried out, as those of the thermal lens spectroscopic system A in FIG. 3 are denoted by the same reference numerals, and description thereof is omitted.

As shown in FIG. 11, probe light sources and multiplexers are not provided in light source units 1210, 1220, 1230, and 1240 of the fluorescence detection system B since probe light is not required as distinct from the thermal lens spectroscopic system A.

In the fluorescence detection system B, fluorescences generated by irradiation of excitation light on samples 361, 362, 363, and 364 are gathered by probes (SELFOC micro lenses (SML) (registered trademark)) 351, 352, 353, and 354 that have been used for irradiation of the excitation light. The fluorescences gathered by the probes 351, 352, 353, and 354 are transmitted through optical fibers 101, 102, 103, and 104 and separated from the excitation light by branching modules 1211, 1212, 1213, and 1214 provided at the midpoints in the optical fibers 101, 102, 103, and 104. The separated fluorescences are transmitted through the optical fibers 1121, 1122, 1123, and 1124 and collectively irradiated on a photodiode 370.

The fluorescences irradiated on the photodiode 370 are photoelectrically converted by the photodiode 370 and sent as a signal to an IV amplifier 380.

Processing performed on the signal by the IV amplifier 380 and at subsequent stages is the same as in the case of the thermal lens spectroscopic system A.

It is to be understood that the object of the present invention may also be accomplished by supplying a system or an apparatus with a storage medium in which a program code of software, which realizes the functions of any of the above described embodiments is stored, and causing a computer (or CPU or MPU) of the system or apparatus to read out and execute the program code stored in the storage medium.

In this case, the program code itself read from the storage medium realizes the functions of any of the above described embodiments, and hence the program code and the storage medium in which the program code is stored constitute the present invention.

Examples of the storage medium for supplying the program code include a floppy (registered trademark) disk, a hard disk, a magneto-optical disk, a CD-ROM, a CD-R, a CD-RW, a DVD-ROM, a DVD-RAM, a DVD-RW, a DVD+RW, a magnetic tape, a nonvolatile memory card, and a ROM. Alternatively, the program code may be downloaded via a network.

Further, it is to be understood that the functions of any of the above described embodiments may be accomplished not only by executing a program code read out by a computer, but also by causing an OS (operating system) or the like which operates on the computer to perform a part or all of the actual operations based on instructions of the program code.

Further, it is to be understood that the functions of any of the above described embodiments may be accomplished by writing a program code read out from the storage medium into a memory provided on an expansion board inserted into a computer or in an expansion unit connected to the computer and then causing a CPU or the like provided in the expansion board or the expansion unit to perform a part or all of the actual operations based on instructions of the program code..

### Industrial Applicability

According to the detection method in the first aspect of the present invention, since a plurality of excitation energies with different frequencies are applied to measured substances at the same time, and changes in physical quantity based on physicochemical changes in the measured substances caused by the applied excitation energies are detected with respect to individual frequency components of excitation energies at the same time, a plurality of measured substances in a fluid test sample can be measured at the same time, qualitative analysis of the measured substances can be conducted with ease, and measurement errors in excitation energies of the measured substances can be reduced.

According to the detection method in the first aspect of the present invention, since detected changes in physical quantity are subjected to Fourier transformation with respect to individual frequency components of excitation energies, changes in physical quantity can be measured with respect to individual frequency components of excitation energies at the same time and with ease.

According to the detection method in the second aspect of the present invention, a probe light is irradiated on measured substances, a plurality of flashing excitation lights with different frequencies are irradiated on the measured substances at the same time, and the probe light refracted by a thermal lens formed by the irradiated flashing excitation lights are detected with respect to individual frequency components of the flashing excitation lights at the same time, and hence highly-sensitive qualitative analysis of the measured substances can be conducted with ease, and errors in the measurement of the measured substances can be reduced.

According to the detection method in the second aspect of the present invention, since a signal of a detected probe light is subjected to Fourier transformation with respect to individual frequency components of flashing excitation lights, the signal of the probe light can be measured with respect to individual frequency components of the flashing excitation lights at a time and with ease.

According to the detection method in the third aspect of the present invention, a plurality of flashing excitation lights with different frequencies are irradiated on measured substances, and fluoresces induced from the irradiated flashing excitation lights are detected with respect to individual frequency components of the flashing excitation lights, qualitative analysis of the measured substances can be conducted with ease, and errors in the measurement of the measured substances can be reduced.

According to the detection method in the third aspect of the present invention, since signals of detected fluorescences are subjected to Fourier transformation with respect to individual frequency components of flashing excitation lights, the signals of the fluorescences can be measured with respect to individual frequency components of the flashing excitation lights at the same time and with ease.

According to the signal detection method in the fifth aspect of the present invention, the thermal lens spectroscopic system in the sixth aspect of the present invention, the fluorescence detection system in the seventh aspect of the present invention, the signal detection apparatus in the eighth aspect of the present invention, the signal detection system in the ninth aspect of the present invention, the signal detection program in the tenth aspect of the present invention, and the storage medium in the eleventh aspect of the present invention, the magnitude of a peak waveform in a predetermined frequency band are detected, and hence a frequency component included in a measurement signal can be easily extracted. Also, even if a plurality of different frequencies are included in a measurement signal, they can be easily extracted at the same time.

According to the signal detection method in the fifth aspect of the present invention, the signal detection apparatus in the eighth aspect of the present invention, the signal detection program in tenth aspect of the present invention, since the width of a predetermined frequency band is 500 Hz or less, a frequency component included in a measurement signal can be easily extracted. Also, even if a plurality of different frequencies are included in a measurement signal, they can be reliably extracted at the same time.

According to the signal detection method in the fifth aspect of the present invention and the signal detection apparatus in the eighth aspect of the present invention, since the signal detection method is applied to the thermal lens spectroscopic system or the fluorescence detection system, the thermal lens spectroscopic system or the fluorescence detection system itself can be reduced in cost and size.

According to the signal detection apparatus in the eighth aspect of the present invention, since the input unit has the audio input terminal, an output from an external device can be input as an audio signal, as a result of which it is not necessary to have an A/D converter ready, and hence the thermal lens spectroscopic system or the fluorescence detection system itself can be reduced in cost.

## Claims

1. A detection method comprising:
an applying step of applying a plurality of excitation energies with different frequencies to measured substances; and
a detecting step of detecting changes in physical quantity based on physicochemical changes in the measured substances caused by the applied excitation energies with respect to individual frequency components of the excitation energies at the same time.

2. A detection method according to claim 1, comprising a Fourier transformation step of carrying out Fourier transformation of the detected change in physical quantity with respect to individual frequency components of the excitation energies.

3. A detection method according to claim 1, wherein the excitation energies are comprised of excitation lights.

4. A detection method comprising:
a probe light irradiating step of irradiating a probe light on measured substances;
an excitation light irradiating step of irradiating a plurality of flashing excitation lights with different frequencies on the measured substances at the same time and
a detecting step of detecting the probe light refracted by a thermal lens formed by the irradiated flashing excitation lights with respect to individual frequency components of the flashing excitation lights at the same time.

5. A detection method according to claim 4, comprising a Fourier transformation step of carrying out Fourier transformation of a signal of the detected probe light with respect to individual frequency components of the flashing excitation lights.

6. A detection method comprising:
an excitation light irradiation step of irradiating a plurality of flashing excitation lights with different frequencies on measured substance; and
a detection step of detecting fluorescences generated by the irradiated excitation lights with respect to individual frequency components of the excitation lights at the same time.

7. A detection method according to claim 6, comprising a Fourier transformation step of carrying out Fourier transformation of a signal of the detected fluorescences with respect to individual frequency components of the flashing excitation lights.

8. A microchemical system using a detection method according to claim 1.

9. A signal detection method which comprises an input step of inputting a signal, a fast Fourier transformation step of carrying out fast Fourier transformation on the input signal, and an output step of outputting a frequency spectrum of the signal on which the fast Fourier transformation has been carried out, the signal detection method comprising:
a detection step of detecting magnitudes of peak waveforms in a predetermined frequency band from the output frequency spectrum.

10. A signal detection method according to claim 9,
wherein a width of the predetermined frequency band is 500 Hz or less.

11. A signal detection method according to claim 10,
wherein a width of the predetermined frequency band is 100 Hz or less.

12. A signal detection method according to claim 11,
wherein a width of the predetermined frequency band is 10 to 100 Hz.

13. A signal detection method according to claim 9,
wherein the signal detection method is for use with a detection system that repeatedly induces a physical phenomenon at a predetermined frequency and detects changes in the physical phenomenon.

14. A signal detection method according to claim 13,
wherein the detection system comprises a thermal lens spectroscopic system or a fluorescence detection system.

15. A signal detection method according to claim 9,
wherein the magnitudes of the peak waveforms are peak values.

16. A signal detection method according to claim 9,
wherein the magnitudes of the peak waveforms are integrated values of peaks.

17. A thermal lens spectroscopic system using a signal detection method according to claim 9.

18. A fluorescence detection system using a signal detection method according to claim 9.

19. A signal detection apparatus which comprises an input unit adapted to input a signal, a fast Fourier transformation unit adapted to carry out fast Fourier transformation on the input signal, and an output unit adapted to output a frequency spectrum of the signal on which the fast Fourier transformation has been carried out, the signal detection apparatus comprising:
a detection unit adapted to detect magnitudes of peak waveforms in a predetermined frequency band from the output frequency spectrum.

20. A signal detection apparatus according to claim 19, wherein a width of the predetermined frequency band is 500 Hz or less.

21. A signal detection apparatus according to claim 20, wherein a width of the predetermined frequency band is 100 Hz or less.

22. A signal detection apparatus according to claim 21, wherein a width of the predetermined frequency band is 10 to 100 Hz.

23. A signal detection apparatus according to claim 19, wherein the signal detection apparatus constitutes a part of a detection system that repeatedly induces a physical phenomenon at a predetermined frequency and detects changes in the physical phenomenon.

24. A signal detection method according to claim 23,
wherein the detection system comprises a thermal lens spectroscopic system or a fluorescence detection system.

25. A signal detection apparatus according to claim 19, wherein said input unit is comprised of an audio input terminal.

26. A signal detection apparatus according to claim 19, wherein the magnitudes of the peak waveforms are peak values.

27. A signal detection apparatus according to claim 19, wherein the magnitudes of the peak waveforms are integrated values of peaks.

28. A signal detection system including a signal detection apparatus according to claim 19, comprising:
a plurality of light sources; and
a modulator adapted to modulate lights output from said plurality of light sources using different frequencies;
wherein the modulated lights are irradiated on respective measured substances, signals generated by the irradiation are input to said input unit at the same time, said fast Fourier transformation unit carries out fast Fourier transformation of the input signals at the same time, and said detecting unit detects magnitudes of peak waveforms in the predetermined frequency band at respective frequencies corresponding to the respective different frequencies.

29. A signal detection system according to claim 28,
wherein a spacing between the different frequencies is from no less than 30 Hz to no more than 200 Hz.

30. A signal detection system according to claim 29,
wherein a spacing between the different frequencies is from no less than 50 Hz to no more than 200 Hz.

31. A signal detection system according to claim 30,
wherein a spacing between the different frequencies is from no less than 100 Hz to no more than 200 Hz.

32. A signal detection system according to claim 28, comprising one photoelectric conversion element, and optical fibers that connect said optical conversion element and the measured substances to each other.

33. A signal detection program which comprises an input module for inputting a signal, fast Fourier transformation module for carrying out fast Fourier transformation on the input signal, and an output module for outputting a frequency spectrum of the signal on which the fast Fourier transformation has been carried out, the signal detection program comprising:
a detection module for detecting magnitudes of peak waveforms in a predetermined frequency band from the output frequency spectrum.

34. A signal detection program according to claim 33, wherein a width of the predetermined frequency band is 500 Hz or less.

35. A signal detection program according to claim 34, wherein a width of the predetermined frequency band is 100 Hz or less.

36. A signal detection program according to claim 35, wherein a width of the predetermined frequency band is 10 to 100 Hz.

37. A signal detection program according to claim 33, wherein the magnitudes of the peak waveforms are peak values.

38. A signal detection program according to claim 33, wherein the magnitudes of the peak waveforms are integrated values of peaks.

39. A computer-readable storage medium storing a program according to claim 33.
